# EUROPEAN PATENT APPLICATION

(11) **EP 0 571 106 A1**
(43) Date of publication of application: **24.11.1993**
(21) Application number: 93303504.0
(22) Date of filing: 06.05.1993
(51) Int. Cl.: G01L 1/24, G01L 9/00

(54) **Optical force transducer based on a fabry-perot resonator**

(30) Priority: 19.05.1992 FI 922262
(71) Applicant: VAISALA TECHNOLOGIES INC., OY, SF-01670 Vantaa (FI)
(72) Inventor: Lehto, Ari, SF-00700 Helsinki (FI); Orpana, Markku, SF-02340 Espoo (FI); Korhonen, Anssi, SF-00700 Helsinki (FI); Tammela, Simo, SF-02130 Espoo (FI)
(74) Representative: Jennings, Nigel Robin

(57) **Abstract**

The invention concerns a transducer for measurement of force. The transducer comprises a body part (15), a sensing element (4,27,37) springedly mounted on the body piece (15), the actuated sensing element acting as a force-receiving element whose deflection relative to the body piece (15) can be employed for computing the force applied onto the sensing element (4,27,37), and an optical detection assembly (1,2,3,5,6) for determining the deflection of the sensing element (4,27,37). According to the invention the body piece (15) and the sensing element (4,27,37) form a short optical Fabry-Perot resonator (21,23) operated in the reflection mode, and the optical detection assembly (1,2,3,5,6) comprises a wide-spectrum light source (1), optical conductors (2,3) for routing a ray of light from the light source (1) to the resonator (33) and back therefrom to the detection elements, dispersive elements (5) for resolving the spectrum of light received from the resonator (33) into wavelength bands, and detector elements (6) for detecting the wavelengths of absorption maxima (A1,A2) in the dispersed spectrum of light, whereby the locations of the spectral intensity minima can be used for computing the optical length of the resonator (33) which is proportional to the force (F,F') applied onto the sensing element (4,27,37).

## Description

The present invention is related to an optical force transducer according to the preamble of claim 1.

The invention is principally intended for applications in the measurement of absolute pressure, differential pressure and acceleration. It is also suited to the measurement of force.

Temperature and pressure are the most common measurement variables in industrial processes. Pressure transducers have been rapidly developed toward ever smaller size and higher performance. This can be mostly attributed to the application of silicon technology from microelectronics to silicon-based transducers.

Silicon has excellent mechanical properties as it obeys Hooke's law up to the breaking stress and is hysteresis-free at temperatures below 600 °C. An oxide or nitride can be grown onto silicon, whereby it becomes chemically resistant.

Transducers are based on both static and vibrating structures. Pressure change is conventionally detected in static structures by virtue of the piezoresistive effect, change of capacitance or change of optical intensity. A piezoresistive transducer draws upon the electrical and mechanical properties of silicon, while a capacitive or optical transducer utilizes the mechanical properties of silicon alone.

Temperature dependence of sensitivity and offset drift is appreciably smaller in a capacitive transducer than in a piezoresistive transducer. The capacitive transducer also has superior performance at low pressure ranges.

B. Culshaw¹ has disclosed an optically-sensing pressure transducer based on silicon technology, the interior of said transducer containing a mechanically vibrating bridge whose tensional stress is related to the imposed pressure. The resonant frequency of the bridge is a function of the tensional stress, and the output signal from the transducer is directly the resonant frequency of the bridge.

The output frequency of the sensing element can be measured with a high accuracy. Another advantage of the construction is the operation of the sensing element itself without electrical connections. The sensing element is enclosed in a vacuum to attain a sufficiently high Q-factor for the vibrating element. This property, however, bears the disadvantage that the transducer is unsuited to differential pressure measurement, since the reference pressure necessary in such an application must be applied to the interior of the transducer. Such a transducer is also sensitive to shocks that can change the vibrating mode of the sensing element.

The vibrating transducer operates with the less exciting power the higher the Q-factor of the vibrating element. The Q-factor is typically elevated by bringing the interior of the transducer to a vacuum. This has the corollary that these prior-art transducers cannot be used in differential pressure measurements as this would permit the vibrating element to be surrounded by the gas atmosphere of the reference pressure, thereby causing the Q-factor of the element to fall to an unacceptably small value.

I.A. Dziuban et al.² have disclosed an optically-sensing pressure transducer based on silicon technology, said transducer having the end of an optical fiber attached to a diaphragm made of single-crystal silicon. With a change of the imposed pressure, the diaphragm is deflected, as well as the attached fiber. The fiber end is located close to a detector so that the intensity of light falling on the detector will be dependent on the position of the fiber end relative to the detector. The transducer output signal is available as voltage or current caused by the light impinging on the detector.

The above embodiment suffers from the sensitivity of the output signal to intensity changes of the light source, thus requiring the use of a reference channel for compensation. The publication by the authors does not disclose any method for implementing such compensation. Another disadvantage is the high temperature sensitivity of the detector output signal, whereby sensing of transducer internal temperature is necessary for compensation.

It is an object of the present invention to overcome the above-described disadvantages of prior-art technology and to achieve an entirely novel type of optical force transducer.

The present invention discloses a force transducer applicable to the measurement of pressure and acceleration, said transducer incorporating a Fabry-Perot resonator with variable length and a spectrometer suited to the measurement of reflection spectrum emitted from said resonator.

The invention is based on forming a Fabry-Perot resonator as an integral part of the transducer and then employing said resonator for measuring the deflection of the sensing element caused by the force imposed on the element.

More specifically, the transducer according to the invention is characterized by what is stated in the characterizing part of claim 1.

The invention provides significant benefits.

Namely, the transducer according to the invention is generic by character as the transducing part of the transducer, which is comprised by a spectrum-resolving dispersive element and a linear array sensor, can be identical for all desired force ranges to be measured. The stiffness of the movable sensing reflector in the resonator can be dimensioned by, e.g., varying its thickness so that the deflection of the moving reflector remains the same with a certain relative value of the external force irrespective of the maximum value of the measurement range. Then, the linear array sensor performs the detection over an identical spectral range in all design variants.

The transducer according to the invention has excellent shock resistance as it contains no vibrating element damageable by a shock. A conventional transducer can also resonate with vibrations from the environment, particularly those having a frequency close to a resonant frequency of the vibrating element in the conventional transducer. By contrast, the transducer according to the invention can be designed for a very high resonant frequency of the diaphragm moving under pressure, so any possible effect of external vibration will be evidenced only as widening of spectral lines on the light-sensitive area of the linear array sensor. This, however, does not prevent the detection of minima in the spectrum.

The electronics enclosure which houses the transducing part of the transducer according to the invention is rarely subjected to such shocks as sensing part proper.

The transducer according to the invention uses a wide-spectrum light source such as, e.g., a miniature incandescent bulb or an LED. These are low-priced standard components and any shift in their wavelength spectrum due to temperature variations does not deteriorate the function of the transducer.

The use of a wide-spectrum light source also achieves minimization of fiber-related disturbance effects on the measurement as white light cannot form strong optical interference maxima.

The transducer according to the invention is tolerant to variations in the output intensity of the light source without compromising the measurement accuracy of the transducer. This is because the linear array sensor is employed for detection of intensity minima only, instead of the actual intensity level.

The embodiment according to the invention is also suited to differential pressure measurement simply by applying the reference pressure to the interior of the resonator.

With the exception of the vibrating element types, prior-art transducers are suitable for the measurement of acceleration. A vibrating element can only be operated under tensional stress, thus making it inapplicable to the measurement of a force which can cause compressive stress on the element. Such transducers whose interior is in a vacuum cannot, however, be provided with a sensitive diaphragm, because the diaphragm must be capable of withstanding the ambient pressure. The present invention is free from this limitation, since the moving reflector diaphragm of the optical resonator can be made extremely agile if both sides of diaphragm are operated at equal pressure. When a particularly sensitive acceleration transducer is desired, the reflector diaphragm of the resonator is advantageously provided with an additional mass.

In the following the invention is examined in greater detail with reference to exemplifying embodiments illustrated in the annexed drawing in which
Figure 1 shows diagrammatically a transducer according to the invention.
Figure 2 shows a transducer according to the invention in a longitudinally sectioned side view.
Figure 3 shows the shape of the measured signal on the detector element of the transducer according to the invention.
Figure 4 shows an alternative embodiment for the transducer structure illustrated in Fig. 2.

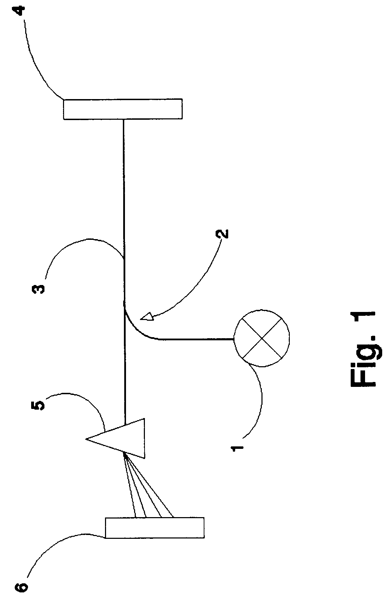

With reference to Fig. 1, a ray of white light is transmitted from a light source 1 via a branching coupler 2 into an optical fiber 3, along which the light is routed to the sensing structure 4. This structure reflects all the light except for one or more narrow wavelength bands. The reflected spectrum of light is transmitted along a fiber 3 to a dispersive element 5 which can be a grating grid or prism. The grating grid can be implemented using integrated optical technology, as well as a linear array sensor 6 (photodiode array or linear array CCD sensor) acting as the detector. The other mirror of the sensing resonator 4 is movable under the influence of an external force such as, e.g., pressure thus permitting a change in the optical length of the resonator.

The linear array sensor 6 detects the absorption maxima caused by the sensing resonator on the wide-band spectrum of the white light, the positions and mutual wavelength spacings of said maxima being dependent on the optical length of the sensing resonator. This length is arranged to be proportional to, e.g., the imposed pressure or acceleration.

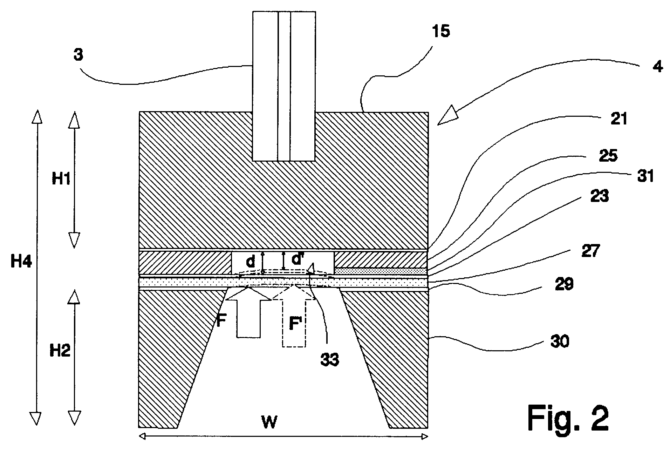

With reference to Fig. 2, a ray of light is routed along an optical path formed by an optical fiber 3 into the transducer structure 4. The transducer structure 4 is comprised of a body part 15 made from monocrystalline silicon and of an integral actuated sensing diaphragm 27 of such a small thickness that an external force F applied onto the diaphragm can cause a measurable change in the distance between said diaphragm 27 and the body part of the transducer structure. Hence, the actuated diaphragm 27 can be considered an element springedly attached to the transducer body part 15. The material of the body part 15 is transparent to wavelengths greater than 1.1 µm. The ray of light launched from the optical fiber 3 is transmitted through the light-transparent section of the body part 15 so as to first impinge on a partially transmissive reflector 21 integral with the body part 15, through which reflector a portion of the light is transmitted into a resonator space 33 and through the space to impinge on a reflector surface 23 on the actuated sensing membrane. Those wavelength components of a wide-spectrum light, for whom the resonator optical length d is equal to an integral number of half-wavelengths, the attenuation will be high; so such wavelengths can be detected as minima in the return signal received from the optical fiber 3. When a larger force F' is applied onto the actuated diaphragm 27, the distance between the diaphragm 27 and the transducer body piece will be reduced to value d', whereby new intensity minima are detected.

The resonator 33 illustrated in Fig. 2 can be defined as an optical, short Fabry-Perot resonator operating in the reflection mode. The term short must be understood to refer to a resonator length which is half or full wavelength relative to the measured wavelength. In practice this means that the length d of the resonator 33 is in the order of 0.6...1.5 µm.

In commercial fabrication the transducer structure 4 illustrated in Fig. 2 is made through a conventional thin-film deposition process in which a substrate 15 of monocrystalline silicon is covered with a partially transmissive metal film 21. Next, onto the metal film 21 is grown a silicon dioxide layer 25, whose thickness determines the basic height of the resonator space 33. Onto the silicon dioxide layer 25 is then deposited a second metal film 23 whose function is to act as the other reflector of the resonator 33. Onto the metal film 23 is deposited a polycrystalline silicon layer 27 whose thickness determines the mechanical sensitivity of the transducer 4. Using a suitable method, the silicon dioxide layer 25 is etched to form the resonator space 33. Finally, a protective element 30 is made from monocrystalline silicon. An intermediate layer 29 of, e.g., glass is employed for attaching the protective element 30 to the sensing diaphragm 27 made from polycrystalline silicon. The protective element 30 has a suitable inlet for routing the measured pressure in differential pressure measurements to the interior of the transducer. The reference pressure is routed to the resonator via a channel 31, which can be omitted in absolute pressure transducers.

Typical dimensions for a transducer element are given in the following table:

| | TYPICAL | MIN./MAX. |
|---|---|---|
| H1 | 380 µm | 360...520 µm |
| H2 | 380 µm | 360...520 µm |
| H4 | 760 µm | 720...1040 µm |
| W | 2 mm | 1...3 mm |
| d | 1 µm | 0.6...1.5 µm |
| THICKNESS OF SENSING DIAPHRAGM 27 | 1 µm | 0.7...10 µm |

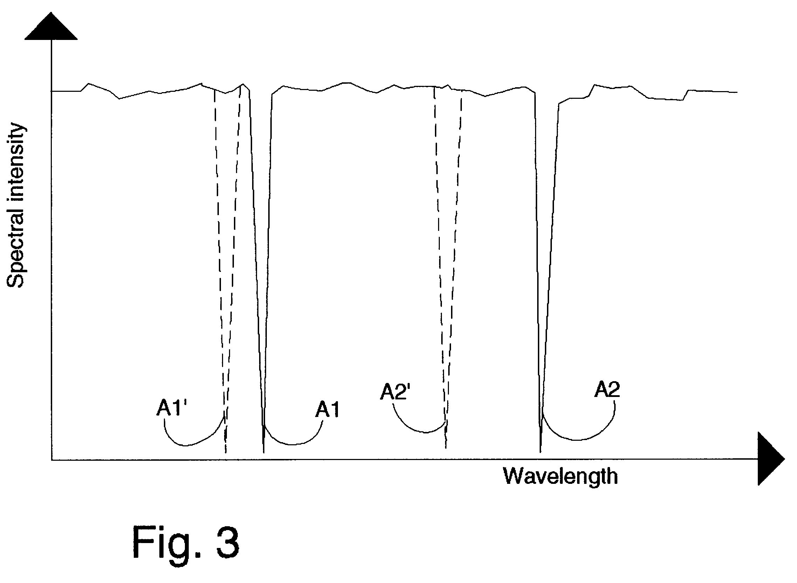

With reference to Fig. 3, according to the operating principle of the Fabry-Perot resonator, those wavelength components of a spectrum, for whom the resonator optical length d (or d') is equal to an integral number of half-wavelengths, will be almost entirely removed from spectrum reflected back to the optical fiber 3, whereby a force F causes intensity minima A1 and A2 and a force F' causes intensity minima A1' and A2', respectively. By resolving the spectrum with the help of a prism 5 illustrated in Fig. 1, or alternatively by a grating grid, and then detecting the locations of the minima A1 and A2 (or A1' and A2', respectively) using a linear array sensor 6, the resonator optical length d can be determined and the magnitude of the force F computed from the mechanical properties of the transducer structure. In fact, even the location of a single intensity minimum is sufficient for the determining the magnitude of the force.

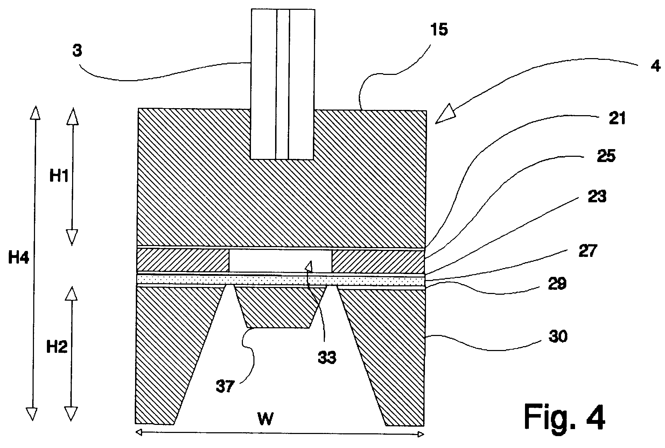

With reference to Fig. 4, the sensing membrane 27 can be provided with an additional mass 37, whereby the transducer becomes well suited to acceleration measurements.

In manufacturing the substrate for the transducer structure can be either the body piece 15 or the protective element 30, as well.

Fig. 2 shows one embodiment of a typical transducer structure. For those versed in the art it is obvious that a plurality of different techniques can be employed for the fabrication of the structure. The characterizing property in the invention is that a Fabry-Perot resonator is formed having its one reflector movable under actuation by an external force such as pressure, for instance.

### References:

1. B. Culshaw, "Micromachined Silicon - A Synergistic Approach to Optical Fibre Sensing?", Proc. 7th Optical Fibre Sensors Conference, Dec. 2 - 6, 1990, Sydney, New South Wales.
2. I. A. Dziuban et al., "Silicon Optical Pressure Sensor", Eurosensors V, Book of Abstracts, 30 Sept. - 2 Oct. 1991, Rome.

## Claims

1. A transducer for measurement of force, said transducer comprising
- a body part (15),
- a sensing element (27, 37) springedly mounted on said body piece (15), said actuated sensing element acting as a force-receiving element whose deflection relative to the body piece (15) can be employed for computing the force applied onto said sensing element (27, 37), and
- an optical detection assembly (1, 2, 3, 5, 6) for determining the deflection of the sensing element (27, 37),
**characterized** in that
- said body piece (15) and said sensing element (27, 37) form a short optical Fabry-Perot resonator (21, 23) operated in the reflection mode, and
- said optical detection assembly (1, 2, 3, 5, 6) comprises
- a wide-spectrum light source (1),
- optical conductors (2, 3) for routing a ray of light from said light source (1) to said resonator (33) and back therefrom to detection elements,
- dispersive elements (5) for resolving the spectrum of light received from said resonator (33) into wavelength bands, and
- detector elements (6) for detecting the wavelengths of absorption maxima (A1, A2) of in the dispersed spectrum of light,
whereby the locations of the spectral intensity minima can be used for computing the optical length of the resonator (33) which is proportional to the force (F, F') applied onto the sensing element (27, 37).

2. A transducer as defined in claim 1, **characterized** in that said detector element (6) is a linear array sensor.

3. A transducer as defined in claim 1, **characterized** in that said light source (1) is an incandescent bulb.

4. A transducer as defined in claim 1, **characterized** in that said light source (1) is an LED.

5. A transducer as defined in claim 1, **characterized** in that said dispersive element (5) is a miniature-size prism.

6. A transducer as defined in claim 1, **characterized** in that said dispersive element (5) is an optical grating grid.

7. A transducer as defined in claim 6, **characterized** in that said optical grating grid (5) is made on the same substrate with the linear array sensor element (6) using similar fabrication techniques of integrated optics.

8. A transducer as defined in any foregoing claim, **characterized** in that the body piece (15) acts as the substrate for the entire transducer.

9. A transducer as defined in any foregoing claim, **characterized** in that the protective element (30) acts as the substrate for the entire transducer.
